# EUROPÄISCHE PATENTANMELDUNG

(11) **EP 4 410 463 A1**
(43) Veröffentlichungstag der Anmeldung: **07.08.2024**
(21) Anmeldenummer: 23208569.6
(22) Anmeldetag: 08.11.2023
(51) Int. Cl.: B23D 31/00, B25B 33/00, E03C 1/02, B23D 21/06

(54) **WERKZEUG UND VERFAHREN ZUM KÜRZEN EINES ROHRABSCHNITTS**

(30) Priorität: 15.11.2022 DE 102022130170
(71) Anmelder: Viega Technology GmbH & Co. KG, 57439 Attendorn (DE)
(72) Erfinder: Dasbach, Philipp, 57234 Wilnsdorf (DE); Goska, David, 57439 Attendorn (DE); Klimpel, Sebastian, 57439 Attendorn (DE)
(74) Vertreter: Cohausz & Florack

(57) **Zusammenfassung**

Die Erfindung betrifft eine Wandscheibe für den Anschluss einer mit Wasser zu versorgenden Komponente, mit einem Befestigungsflansch (4) für das Anbringen an einer Wand, mit einem Zulauf (8) zur Verbindung mit einer Versorgungsleitung, mit einem Ablauf (10) zur Verbindung mit der zu versorgenden Komponente, wobei der Ablauf (10) mit einem Gewinde (18) versehen ist, die dadurch gekennzeichnet ist, dass der Ablauf (10) an mindestens einer axialen Position eine zumindest abschnittsweise, vorzugsweise vollständig, umlaufende Vertiefung (20) als Sollbruchstelle aufweist. Die Erfindung betrifft auch ein Werkzeug zum Kürzen eines Rohrabschnitts (10) mit einem Gewinde (18) mit mindestens einer Sollbruchstelle (20) mit einer ersten Gewindestange (32) mit einem ersten Gewindeabschnitt (34) und mit einer zweiten Gewindestange (36) mit einem zweiten Gewindeabschnitt (38), wobei die zweite Gewindestange (36) eine Bohrung (40) zur Aufnahme der ersten Gewindestange (32) aufweist und die erste Gewindestange (32) und die zweite Gewindestange (36) axial gegeneinander verschiebbar sind, wobei in einer ersten Position der Gewindestangen (32, 36) der erste Gewindeabschnitt (34) und der zweite Gewindeabschnitt (36) benachbart zueinander angeordnet sind und wobei in einer zweiten Position der Gewindestangen (32, 36) der erste Gewindeabschnitt (34) und der zweite Gewindeabschnitt (38) auseinander gezogen und beabstandet zueinander angeordnet sind.

## Beschreibung

Die Erfindung betrifft eine Wandscheibe mit einem Befestigungsflansch für das Anbringen an einer Wand, mit einem Zulauf zur Verbindung mit einer Versorgungsleitung und mit einem Ablauf zur Verbindung mit der zu versorgenden Komponente, wobei der Ablauf mit einem Gewinde versehen ist. Die Erfindung betrifft auch ein Werkzeug zum Kürzen eines Rohrabschnitts mit einem Gewinde mit mindestens einer Sollbruchstelle, insbesondere bei einer Wandscheibe. Des Weiteren betrifft die Erfindung ein Verfahren zum Kürzen eines Rohrabschnitts mit einem eine Sollbruchstelle aufweisenden Gewinde, insbesondere bei einer Wandscheibe.

Wasserleitungen zur Versorgung von Zapfstellen wie z. B. Wasserhähne oder dergleichen werden regelmäßig als Leitungen zwischen einer Wand und einer Vorwand ausgeführt. Dieses ist insbesondere bei Renovierungsarbeiten erforderlich, um ohne einen großen Eingriff in das Mauerwerk die Wasserleitungen verlegen zu können.

Dasselbe Problem ergibt sich bei einer Montage einer Leitung, die an einem Anschlussstutzen angeschlossen werden soll, der in einer in einer Wand eingebrachten Vertiefung angeordnet ist und wobei die Wand anschließend mit Fliesen belegt werden soll. Auch hier muss ein Abstand zwischen dem Anschlussstutzen und der Wandebene der Fliesen überbrückt werden.

Wandscheiben dienen dabei dazu, eine spätere Anschlussmöglichkeit für Armaturen, Ventile, Leitungen oder ähnlichen Komponenten zur Verfügung zu stellen. Die Wandscheibe wird an der bestehenden Wand befestigt und der Zulauf der Wandscheibe ist an eine Versorgungsleitung, zum Beispiel an eine Wasserleitung angeschlossen. An den in der Regel im rechten Winkel von der Wand wegweisenden Ablauf wird die zu versorgende Komponente wie eine Armatur angeschlossen, so dass das zu leitende Medium, beispielsweise Wasser, von der Versorgungsleitung in die Wandscheibe und von der Wandscheibe in die Komponente strömen kann.

Heutzutage werden regelmäßig Wandscheiben mit kurzen Rohrabschnitten mit Gewinden als Ablauf verwendet. Während der Feininstallation von Wasseranschlüssen muss in der Regel der Gewindeanschluss der Wandscheibe verlängert werden, damit dieser bündig zur Wand liegt.

Dazu werden üblicherweise Hahnverlängerungen eingesetzt. Damit der Handwerker immer die passende Hahnverlängerung auf der Baustelle griffbereit hat, ist eine große Anzahl unterschiedlicher Längenabstufungen notwendig. Außerdem wird bei der Montage der Hahnverlängerung eine zusätzliche Dichtstelle zwischen Wandscheibe und Hahnverlängerung erzeugt, die nicht einsehbar und kontrollierbar ist.

Des Weiteren können auch Wandscheiben mit einem langen Rohrabschnitt als Ablauf mit Gewinde eingesetzt werden, der während der Feininstallation mit einem Senkfräser für Bohrmaschine oder Akkuschrauber gekürzt wird.

Da das Kürzen während der Feininstallation durchgeführt wird, besteht die Gefahr die neuen Fliesen zu beschädigen. Denn zum einen werden beim Kürzen Metallspäne erzeugt und zum anderen muss der Rohrabschnitt mit dem Fräskopf bis bündig vor die Fliese gekürzt werden, wobei ein hohes Risiko für Beschädigungen besteht.

Daher liegt der vorliegenden Erfindung das technische Problem zugrunde, Abläufe von Wandscheiben mit Gewindestutzen spanlos kürzen zu können.

Das zuvor aufgeführte technische Problem wird erfindungsgemäß gelöst durch eine Wandscheibe für den Anschluss einer mit Wasser zu versorgenden Komponente, mit einem Befestigungsflansch für das Anbringen an einer Wand, mit mindestens einem Zulauf zur Verbindung mit einer Versorgungsleitung und mit mindestens einem Ablauf zur Verbindung mit der zu versorgenden Komponente, wobei der Ablauf mit einem Gewinde versehen ist, die dadurch gekennzeichnet ist, dass der Ablauf an mindestens einer axialen Position eine zumindest abschnittsweise, vorzugsweise vollständig, umlaufende Vertiefung als Sollbruchstelle aufweist.

Die Wandscheibe kann dabei einerseits nur mit einem Zulauf und einem Ablauf ausgebildet sein. Anderseits kann die Wandscheibe auch als Doppelwandscheibe oder als Wandscheiben-T-Stück ausgebildet sein.

Das Gewinde ist dabei bevorzugt als Innengewinde ausgebildet, da die bekannten Armaturen in der Regel ein Außengewinde am Anschlussstutzen aufweisen.

In bevorzugter Weise ist die mindestens eine Sollbruchstelle durch eine innen ausgebildete Nut und/oder durch eine außen ausgebildete Nut ausgebildet. Die Nut bzw. die Nuten können dabei als V-förmige Kerben ausgebildet sein.

Die zuvor beschrieben Wandscheibe hat den Vorteil, dass beim Ablängen des Gewindeabschnitts durch ein Auftrennen einer der mindestens einen Sollbrauchstelle keine Spanbildung auftritt oder eine Gefahr von Beschädigungen von bereits angebrachten Fliesen gegeben ist. Zudem sind keine Hahnverlängerungen für die Feininstallation mehr notwendig, so dass keine zusätzliche Dichtstelle in der Wand entsteht.

Die innen ausgebildete Nut bildet somit vorzugsweise eine innen liegende Anfasung des Gewindes. Dabei entspricht der Winkel der Anfasung mindestens dem Gewindeflankenwinkel und die Anfasung ist insbesondere gemäß DIN EN 10226-1 ungefähr, vorzugsweise maximal einen Gewindegang tief. Der Winkelbereich der Anfasung kann zwischen 45° und 27,5° liegen.

Zudem ist es bevorzugt, dass die innen ausgebildete Nut mindestens 0,1 mm, vorzugsweise mindestens 0,2 mm tiefer als der Gewindegrund sein, um ein definiertes Abreißen in der Sollbruchstelle und nicht an einem Gewindegang zu gewährleisten.

Des Weiteren kann berücksichtigt werden, dass je tiefer die außen ausgebildete Nut ausgebildet wird, desto größer wird die Spannungsspitze in der Sollbruchstelle. Jedoch darf durch diesen Einstich bei Verwendung von Kupferwerkstoffen die Mindestwandstärke nach EN 1254-20 nicht unterschritten werden. Bei Wandscheiben von ½ Zoll Durchmesser beträgt diese Mindestwandstärke 1,2mm.

Die innen ausgebildete Nut und/oder die außen ausgebildete Nut weisen dabei bevorzugt einen dreieckigen Querschnitt auf, um gezielt die Spannung in der Sollbruchebene zu maximieren. Zur Maximierung der Kerbwirkung in der Sollbruchstelle ist es weiter vorteilhaft, wenn die Nut so spitz wie möglich ausgeführt werden. Aus Gründen der besseren Herstellbarkeit ist eine Verrundung in der Sollbruchstelle möglich, die vorzugsweise nicht größer als die Verrundung der Gewindespitzen, beispielsweise von ca. R2,5, ausgebildet ist.

Der Abstand von jeweils zwei Sollbruchstellen ist so zu wählen, dass die Mindestgewindelängen nach DIN EN 10226-1 und ISO 7-1 eingehalten werden. Bei der bevorzugten Abmessung für Wandscheiben von ½ Zoll Durchmesser beträgt der Abstand zwischen zwei Sollbruchstellen bzw. die Mindestgewindelänge 9,2mm. Aus den Anforderungen an Mindestgewindelänge, empfohlener Nuttiefe und Fasenwinkel ergibt sich ein Sollbruchstellenabstand von mindestens 10mm, vorzugsweise 10,5mm.

Weiterhin kann berücksichtigt werden, dass für ein definiertes Abreißen der Sollbruchstelle und für eine gute Oberfläche der Bruchkante nach dem Abreißen ein Material mit einer geringen Bruchdehnung vorteilhaft ist, das einen Sprödbruch ermöglicht. Diese Anforderung wird insbesondere durch Gusswerkstoffe gut erfüllt.

Das oben aufgezeigte technische Problem wird auch durch ein Werkzeug zum Kürzen eines Rohrabschnitts mit einem Gewinde mit mindestens einer Sollbruchstelle gelöst, wobei insbesondere ein Ablauf einer zuvor beschriebenen Wandscheibe gekürzt wird, mit einer ersten Gewindestange mit einem ersten Gewindeabschnitt und mit einer zweiten Gewindestange mit einem zweiten Gewindeabschnitt, wobei die zweite Gewindestange eine durchgehende, vorzugsweise runde oder mehrkantige, Öffnung, insbesondere eine Bohrung zur Aufnahme der ersten Gewindestange aufweist und die erste Gewindestange und die zweite Gewindestange axial gegeneinander verschiebbar sind, wobei in einer ersten Position der Gewindestangen der erste Gewindeabschnitt und der zweite Gewindeabschnitt benachbart zueinander angeordnet sind und wobei in einer zweiten Position der Gewindestangen der erste Gewindeabschnitt und der zweite Gewindeabschnitt auseinander gezogen und beabstandet zueinander angeordnet sind.

Durch ein Einschrauben der beiden Gewindestangen in den Rohrabschnitt kann durch ein Herausziehen der zweiten Gewindestange die Sollbruchstelle aufgerissen und ein distaler Teil des Rohrabschnitts abgerissen werden.

Vorzugsweise nehmen die erste Gewindestange und die zweite Gewindestange eine vorgegebene azimutale Winkelposition zueinander ein. Dadurch wird ein Verdrehen der beiden Gewindestangen gegeneinander verhindert, so dass die beiden benachbart angeordneten Gewindeabschnitte fluchtend zueinander ausgerichtet und angeordnet werden können. Mögliche Ausgestaltungen bestehen in einem Abflachen des Innenteils und ein entsprechendes Gegenprofil des Außenteils oder mittels eines axial verlaufenden Vorsprungs, der in einer Nut geführt wird.

Die Funktionalität des Werkzeugs ist dann gewährleistet, wenn die beiden Gewindeabschnitte der ersten Gewindestange und der zweiten Gewindestange so tief eingeschraubt werden, dass der erste Gewindeabschnitt auf der proximalen Seite und der zweite Gewindeabschnitt auf der distale Seite der aufzureißenden Sollbruchstelle angeordnet sind. Dafür ist in bevorzugter Weise ein Anschlagelement vorgesehen, das verschiebbar auf der Außenseite der zweiten Gewindestange befestigt ist. An vorgegebenen axialen Positionen kann das Anschlagelement angeordnet und befestigt werden, so dass das Werkzeug bis zum Anschlag des Anschlagelements am distalen Ende des Rohrabschnitts eingeschraubt werden kann. Wenn der Anschlag erreicht ist, sind die beiden Gewindeabschnitte so tief wie erforderlich eingeschraubt.

Eine Alternative zum Anschlagelement besteht darin, dass die zweite Gewindestange an der Außenseite mindestens eine zumindest teilweise umlaufende Markierung aufweist. Das Werkzeug kann dann bis zu dieser Markierung eingeschraubt werden, so dass die beiden Gewindeabschnitte so tief wie erforderlich eingeschraubt sind.

Die erste Gewindestange und die zweite Gewindestange sind bei den beschrieben Ausführungsbeispielen aus einem Werkstoff hergestellt, der eine höhere Festigkeit als das Material des das Innengewinde aufweisenden Ablaufs aufweist. Dadurch wird ein zuverlässiges Aufreißen des Ablaufs an der Sollbruchstelle gewährleistet.

Das beschriebene Werkzeug weist in bevorzugter Weise einen Krafterzeuger zum Erzeugen einer Verschiebekraft zum Auseinanderziehen der ersten Gewindestange und der zweiten Gewindestange auf. Der Krafterzeuger überträgt die für das Aufreißen der Sollbruchstelle erforderliche Kraft auf die beiden Gewindestangen, indem diese auseinander gezogen werden und beim Auseinanderziehen die aufreißende Kraft auf die Sollbruchstelle übertragen.

Der Krafterzeuger kann auf unterschiedliche Weise ausgebildet sein und zum Beispiel durch eine Pressmaschine, einen Spindelantrieb oder einen Hebelarm die erforderliche Kraft erzeugen.

Bei einer ersten Ausgestaltung weist der Krafterzeuger ein mit der zweiten Gewindestange verbundenes Gehäuse auf, wobei ein Abtriebskeil in dem Gehäuse verschiebbar angeordnet und an der ersten Gewindestange anliegt, vorzugsweise mit der ersten Gewindestange verbunden ist, und wobei ein Antriebskeil zum Übertragen einer von außen ausgeübten Presskraft in eine lineare Bewegung des Abtriebskeil vorgesehen ist.

Dabei ist vorzugsweise der Antriebskeil im Wesentlichen senkrecht zur Schieberichtung des Abtriebskeils von einer Ausgangsposition in eine Endposition bewegbar und der Abtriebskeil und der Antriebskeil weisen schräg zur Bewegungsrichtung des Abtriebskeils und schräg zur Schieberichtung des Antriebskeils verlaufende Anlageflächen auf. Dabei kann ein Winkel α zwischen der Schieberichtung des Antriebskeils und der schräg verlaufenden Anlagefläche weniger als 45°, insbesondere weniger als 20°, vorzugsweise weniger als 10° betragen. Besonders bevorzugt ist ein Winkelbereich von 2,5° bis 10°.

Durch die schräg verlaufenden Flächen wird die Bewegung des Antriebskeils auf den Abtriebskeil übertragen. Dabei wird abhängig vom vorgegebenen Winkel die auf den Antriebskeil ausgeübte Presskraft als Kraft auf den Abtriebskeil verstärkt übertragen, wobei die Größe der Verschiebung des Abtriebskeils kleiner als die Größe der Verstellung des Antriebskeils ist.

Der beschriebene Krafterzeuger ermöglicht eine Kraftübersetzung durch den Antriebskeil ausgehend von einer betragsmäßig kleineren Kraft, die über einen betragsmäßig größeren Verstellweg einer Pressbacke auf den Antriebskeil übertragen wird, in einen betragsmäßig kleineren Schiebeweg bei einer betragsmäßig größeren Schiebekraft. Diese Kraftübersetzung ist insbesondere bei dem beschriebenen Abtrennen eines Teils eines Rohrabschnitts vorteilhaft, da es hierbei um eine große Kraft bei lediglich kurzem Verstellweg ankommt.

Weiterhin ist in bevorzugter Weise eine Vorspanungsfeder für eine Rückstellung des Antriebskeils in die Ausgangsposition vorgesehen, die in dem Gehäuse angeordnet ist.

Für eine geeignete Einleitung der Presskraft auf den Antriebskeil sind an der Außenseite des Gehäuses und an der Außenseite des Antriebskeils Ansetzflächen für Pressbackenhälften ausgebildet. Diese weisen vorzugsweise eine runde kalottenähnliche Form auf, in die entsprechend rund ausgebildete Pressbackenabschnitte eingreifen. Durch die runde Form ist ein Ansetzen der Pressbacke in unterschiedlichen Winkeln relativ zum Gehäuse möglich, wodurch das Ansetzen und Betätigen des Werkzeugs vereinfacht wird.

Bei einer weiteren Ausgestaltung weist der Krafterzeuger einen ersten Hebel und einen zweiten Hebel auf, die mit einem Gelenk miteinander verbunden sind, wobei der erste Hebel eine erste Kraftübertragungsfläche zur Anlage an einer an der ersten Gewindestange ausgebildeten Ansatzfläche und eine erste Ansetzfläche für das Ansetzen einer ersten Pressbackenhälfte aufweist, wobei der zweite Hebel eine zweite Kraftübertragungsfläche zur Anlage an einer an der zweiten Gewindestange ausgebildeten Ansatzfläche und eine zweite Ansetzfläche für das Ansetzen einer zweiten Pressbackenhälfte aufweist und wobei der Abstand der Kraftübertragungsflächen zum Gelenk kürzer als der Abstand der Ansetzflächen zum Gelenk ist.

Somit wird auch bei dieser Ausgestaltung des Krafterzeugers eine Kraftübersetzung ausgehend von der durch die Pressbackenhälften ausgeübten Presskraft hin zu einer vergrößerten Kraft auf die Ansatzflächen der Gewindestangen bei kürzerem Verstellweg der Gewindestangen.

Das oben aufgezeigte technische Problem wird auch durch ein Verfahren zum Kürzen eines Rohrabschnitts mit einem eine Sollbruchstelle aufweisenden Gewinde gelöst, insbesondere eines Ablaufs einer oben beschriebenen Wandscheibe, bei dem ein zuvor beschriebenes Werkzeug verwendet wird, bei dem der erste Gewindeabschnitt der ersten Gewindestange und der zweite Gewindeabschnitt der zweiten Gewindestange nahe zueinander, vorzugsweise in Anlage zueinander, positioniert werden, bei dem das Werkzeug so weit in den Rohrabschnitt eingeschraubt wird, dass die axiale Position des distalen Endes des ersten Gewindeabschnitts mindestens so tief wie die axiale Position der Sollbruchstelle des Rohrabschnitts positioniert ist und dass die axiale Position des proximalen Endes des zweiten Gewindeabschnitts weniger tief wie die axiale Position der Sollbruchstelle des Rohrabschnitts positioniert ist, bei dem die zweite Gewindestange relativ zur ersten Gewindestange in axialer heraus aus dem Rohrabschnitt bewegt wird und bei dem der Rohrabschnitt durch die Bewegung der zweiten Gewindestange relativ zur ersten Gewindestange an der Sollbruchstelle abgerissen wird.

Durch die Wechselwirkung der beiden Gewindestangen mit zu beiden Seiten einer der Sollbruchstellen angeordneten Abschnitten des Gewindes und durch die relative Bewegung der Gewindestangen wird über eine kurze Strecke eine genügend große Kraft ausgeübt, um das Material im Bereich der Sollbruchstelle aufzureißen und ein Abtrennen zu ermöglichen.

In bevorzugter Weise wird eine Eindringtiefe des Gewindeabschnitts der ersten Gewindestange und des Gewindeabschnitts der zweiten Gewindestange durch Positionieren eines Anschlagelements festgelegt und das Werkzeug wird bis zu einem Anliegen des Anschlagelements am vorderen Ende des Rohrabschnitts eingeschraubt. Damit kann in einfacher Weise sichergestellt werden, dass die beiden Gewindestangen richtig positioniert werden.

Alternativ kann auch eine Markierung an dem zweiten Gewindeabschnitt zur Bestimmung der Einschraubtiefe verwendet werden. Somit kann auf rein optischem Weg die richtige Positionierung der beiden Gewindestangen gewährleistet werden.

Im Folgenden wird die Erfindung anhand von Ausführungsbeispielen mit Bezug auf die Zeichnung erläutert. In der Zeichnung zeigen
- Fig. 1: eine erfindungsgemäße an einer Wand befestigte Wandscheibe,
- Fig. 2: die Wandscheibe aus Fig. 1 mit einer zusätzlichen Vorwand,
- Fig. 3: die Wandscheibe aus Fig. 2 mit einem eingeschraubten Werkzeug zum Kürzen des Ablaufs der Wandscheibe,
- Fig. 4: die Wandscheibe aus Fig. 3 mit abgetrenntem Abschnitt nach dem Kürzen,
- Fig. 5: die Wandscheibe aus Fig. 4 mit gekürztem Ablauf,
- Fig. 5a: die Wandscheibe mit einer zweischichtigen Vorwand mit Fliesenbelag,
- Fig. 6: die Wandscheibe aus Fig. 5 mit einer montierten Armatur,
- Fig. 7: das Werkzeug zum Kürzen des Ablaufs der Wandscheibe aus Fig. 3 in einer vergrößerten Darstellung,
- Fig. 8: das Werkzeug nach Fig. 7 in einem ersten Querschnitt mit einem ersten Krafterzeuger zum Erzeugen einer Verschiebekraft zum Auseinanderziehen der ersten Gewindestange und der zweiten Gewindestange,
- Fig. 9: das Werkzeug nach Fig. 8 in einem zweiten Querschnitt in einer Ausgangsposition,
- Fig. 10: das Werkzeug nach Fig. 9 in einer Endposition,
- Fig. 11: das Werkzeug nach den Fig. 8 und 9 in einer perspektivischen Seitenansicht mit angesetztem Presswerkzeug,
- Fig. 12: eine schematische Darstellung des Werkzeugs mit Krafterzeuger und angesetzter Pressbackenhälfte nach Fig. 10 mit den einwirkenden Kräften,
- Fig. 13: das Werkzeug nach Fig. 7 mit einem zweiten Krafterzeuger in einer Ausgangsposition und
- Fig. 14: das Werkzeug nach Fig. 13 in der Endposition.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

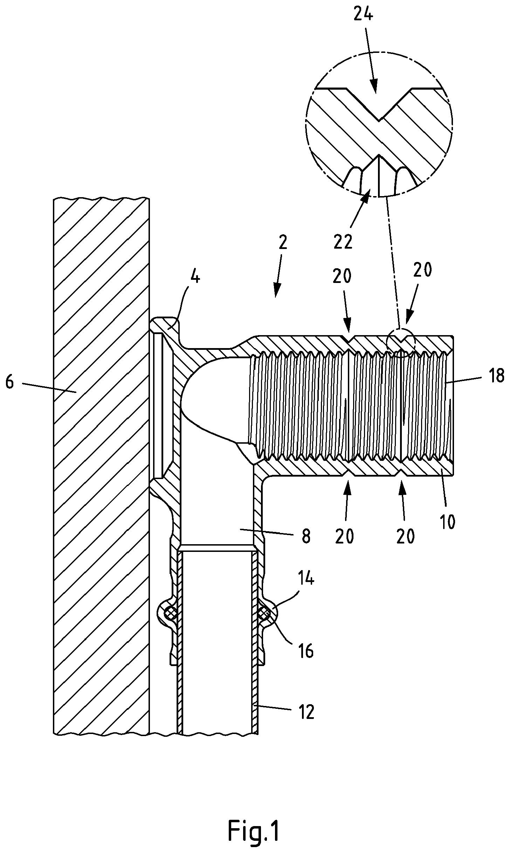

Fig. 1 zeigt zunächst eine Wandscheibe 2 für den Anschluss einer mit Wasser zu versorgenden Komponente. Die Wandscheibe 2 weist einen Befestigungsflansch 4 für das Anbringen an einer Wand 6 auf und verbindet fluidtechnisch einen Zulauf 8 mit einem Ablauf 10 zur Verbindung mit der zu versorgenden Komponente. Der Zulauf 8 ist mit einer Versorgungsleitung 12 mittels eines Pressfittings 14 und eines O-Rings 16 verbunden und dient im Allgemeinen zum Leiten von Wasser. Selbstverständlich kann auch jedes andere Fluid mit der Wandscheibe geführt werden.

Der Ablauf 10 ist als Rohrabschnitt mit einem Gewinde 18 ausgebildet, das als Innengewinde ausgebildet ist und das zum Einschrauben eines Gewindeabschnitts mit Außengewinde der zu versorgenden Komponente dient.

Wie Fig. 1 zeigt, weist der Ablauf 10 an zwei axialen Positionen eine umlaufende Vertiefung 20 als Sollbruchstelle auf. Die Sollbruchstellen 20 werden durch eine innen ausgebildete Nut 22 und durch eine außen ausgebildete Nut 24 gebildet.

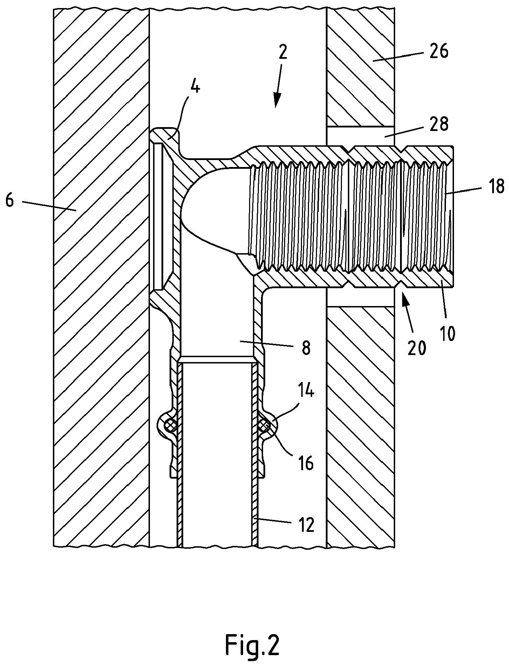

Fig. 2 zeigt die Ausbildung einer Vorwand 26, die mit Abstand zur Wand 6 installiert worden ist, wobei der Ablauf 10 durch eine Öffnung 28 hervorsteht.

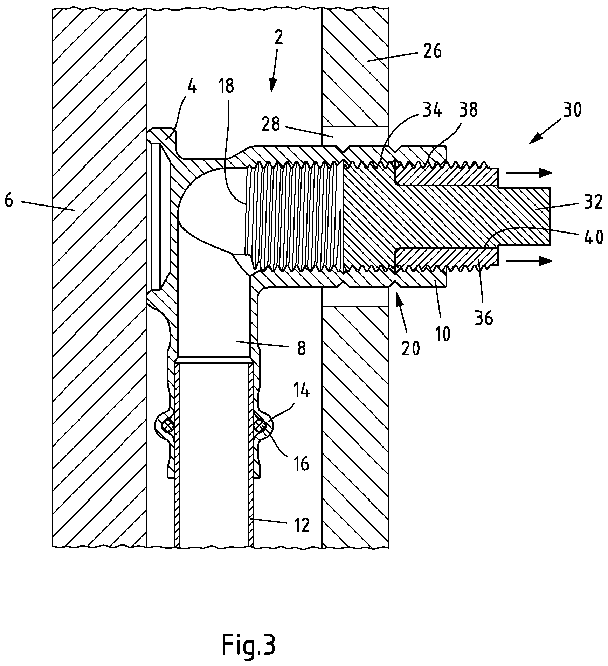

Fig. 3 zeigt weiterhin ein Werkzeug 30 zum Kürzen des Ablaufs 10 einer Wandscheibe 2 nach den Fig. 1 und 2. Das Werkzeug 30 weist eine erste Gewindestange 32 mit einem ersten Gewindeabschnitt 34 und eine zweite Gewindestange 36 mit einem zweiten Gewindeabschnitt 38 auf. Weiterhin weist die zweite Gewindestange 36 eine Bohrung 40 zur Aufnahme der ersten Gewindestange 32 auf und die erste Gewindestange 32 und die zweite Gewindestange 36 sind axial gegeneinander verschiebbar.

In einer ersten Position der Gewindestangen 32 und 36 gemäß Fig. 3 sind der erste Gewindeabschnitt 34 und der zweite Gewindeabschnitt 38 benachbart und fluchtend zueinander angeordnet, damit beide Gewindeabschnitte 34 und 38 nacheinander in das gleiche Gewinde 18 eingeschraubt werden können. In der ersten Position liegen die beiden Gewindeabschnitte 34 und 38 aneinander an.

Die Gewindestangen 32 und 36 sind dabei so weit in das Gewinde 18 des Ablaufs 10 eingeschraubt, dass sich der Gewindeabschnitt 34 proximal der Sollbruchstelle 20 und sich der Gewindeabschnitt 38 distal von der Sollbruchstelle 20 befindet. Die Berührungsstelle zwischen den beiden Gewindeabschnitten 34 und 38 befindet sich somit im Bereich der Sollbruchstelle 20.

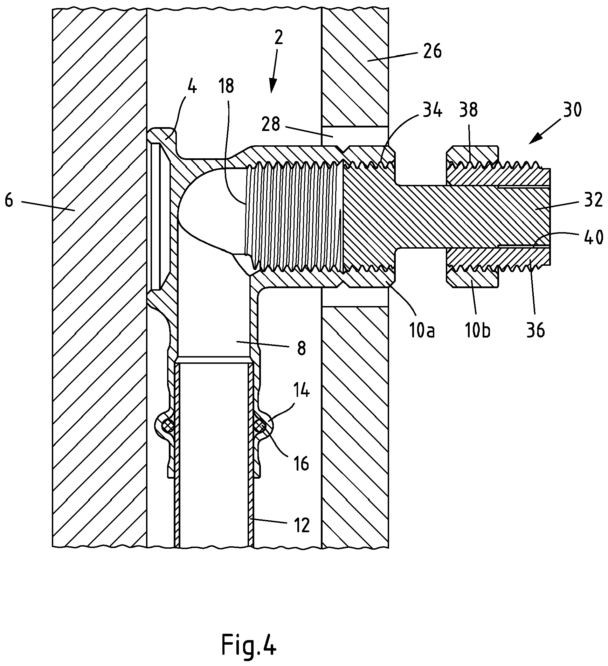

Ausgehend von der ersten Position werden die erste Gewindestange 32 und die zweite Gewindestange 36 auseinander bewegt, wie es durch die beiden Pfeile angedeutet ist. Die zweite Gewindestange 36 wird gegenüber der ersten Gewindestange 32 herausgezogen und in eine zweite Position gebracht, wie sie in Fig. 4 gezeigt ist. Durch das Auseinanderziehen der beiden Gewindestangen 32 und 36 wird der Rohrabschnitt des Ablaufs 10 an einer umlaufenden Sollbruchstelle 20 aufgetrennt bzw. abgerissen, so dass ein gekürzter Ablauf 10a entsteht und das abgerissene Teil 10b mit der zweiten Gewindestange 26 entfernt werden kann.

Fig. 4 zeigt also die zweite Position der Gewindestangen 32 und 36, in der der erste Gewindeabschnitt 34 und der zweite Gewindeabschnitt 38 auseinander gezogen und beabstandet zueinander angeordnet sind.

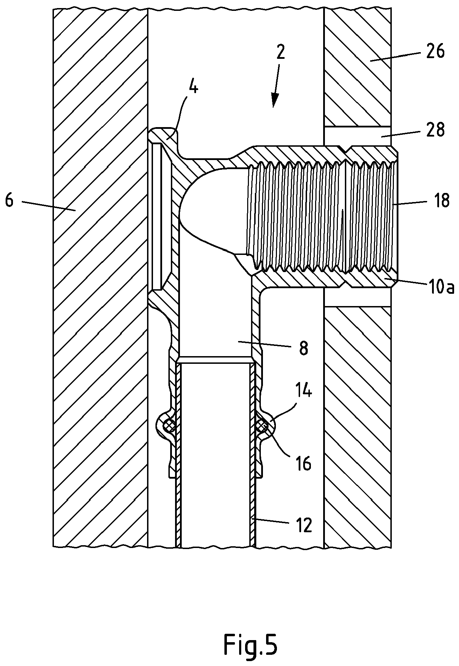

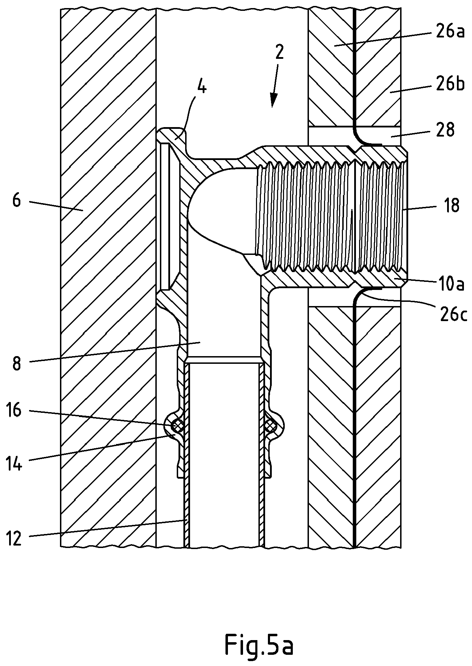

Fig. 5 zeigt die Wandscheibe 2 nach dem Entfernen des abgetrennten Teil 10b und Entfernen des Werkzeugs 30. Das vordere Ende des Ablaufs 10 ragt nur wenig aus der Öffnung 28 hervor, die Wandscheibe 2 ist also an die Bautiefe der Vorwand 26 angepasst worden.

Fig. 5a zeigt eine alternative Ausgestaltung der Vorwand 26 mit zwei Schichten 26a und 26b, von den die zweite Schicht 26b als eine Schicht aus Fliesen ausgebildet ist. In diesem Fall fluchtet das vordere Ende des Ablaufs 10 mit der Oberfläche der Schicht 26b.

In dieser Ausführung bietet die Wandscheibe 2 mit dem langen Rohrabschnitt 10 Vorteile bei der Herstellung der Verbundabdichtung im Dusch- und Badwannenbereich. Hier ist es möglich mit einer Dehnzonenmanschette 26c unmittelbar auf dem Gewindestutzen des Rohrabschnitts 10 abzudichten. Bei der Installation mit Wandscheibe mit einem Kurzgewinde und einer Hahnverlängerung müssten zusätzliche Maßnahmen für eine Abdichtung getroffen werden, beispielsweise das Anbringen einer zusätzliche Abdichthülse.

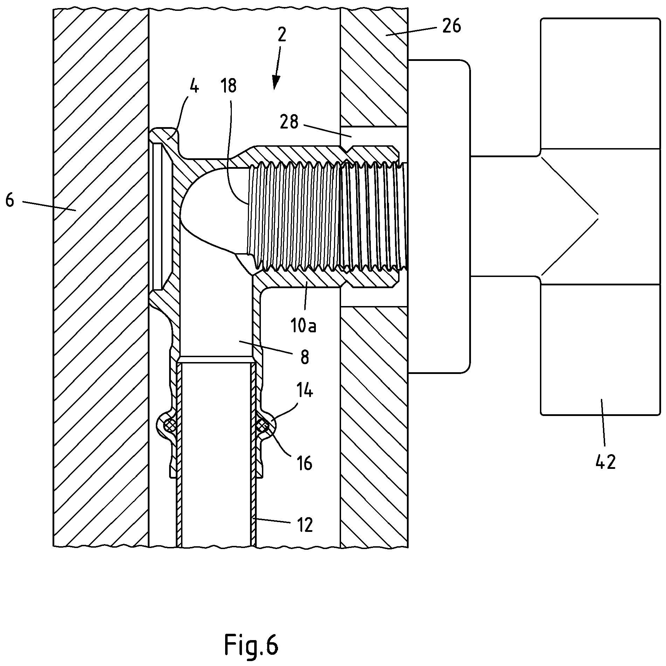

Fig. 6 zeigt schließlich die fertig montierte und angepasste Wandscheibe 2 mit einer angebrachten Komponente in Form eines Wasserhahns 42, der ausgehend von der Versorgungsleitung 12 über den Zulauf 8 und den Ablauf 10 mit Wasser versorgt wird.

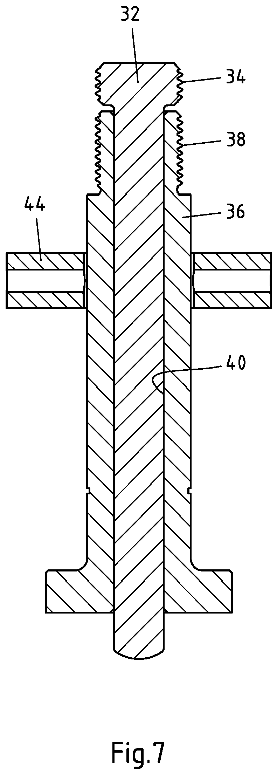

Fig. 7 zeigt das zuvor beschriebene Werkzeug 30 mit der ersten Gewindestange 32 und der zweiten Gewindestange 36 im Querschnitt. Zusätzlich zu der vorigen Darstellung ist ein Anschlagelement 44 vorgesehen, das verschiebbar auf der Außenseite der zweiten Gewindestange 36 befestigt ist. Mittels einer (nicht dargestellten) Befestigungsschraube kann das Anschlagelement 44 positioniert und fixiert werden. Mit dem Anschlagelement 44 kann die Tiefe vorgegeben werden, wie weit die erste Gewindestange 32 und die zweite Gewindestange 36 in das Gewinde 18 eingeschraubt werden sollen, um das Aufreißen einer der Sollbruchstellen 20 zu gewährleisten. Eine weitere Möglichkeit besteht darin, dass die Fixierung des Anschlagelements 44 über eine Rastfunktion mittels federndem Druckstück und einer entsprechenden Vertiefung zum Eingreifen des Druckstücks erfolgt.

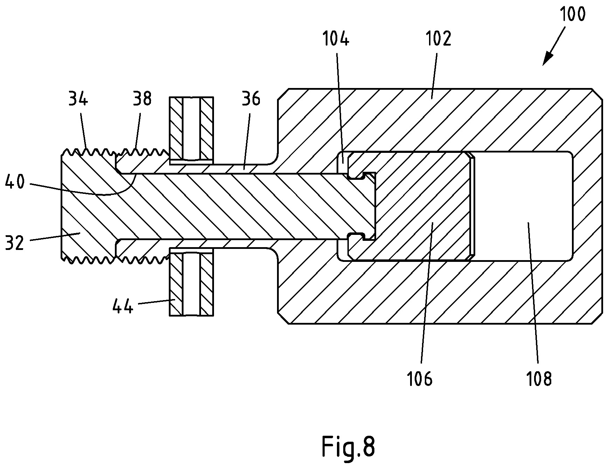

In den Fig. 8 bis 10 ist ein Werkzeug 30 mit erster Gewindestange 32, zweiter Gewindestange 36 und dem Anschlagelement 44 dargestellt. Weiterhin ist ein Krafterzeuger 100 zum Erzeugen einer Verschiebekraft zum Auseinanderziehen der ersten Gewindestange 32 und der zweiten Gewindestange 36 vorgesehen. Der Krafterzeuger 100 weist ein mit der zweiten Gewindestange 36 verbundenes Gehäuse 102 und einen Innenraum 104 auf. Weiterhin ist ein Abtriebskeil 106 in dem Innenraum 104 und somit im Gehäuse 102 verschiebbar angeordnet und mit der ersten Gewindestange 32 formschlüssig verbunden. Zusätzlich ist ein Antriebskeil 108 zum Übertragen einer von außen ausgeübten Presskraft in eine lineare Bewegung des Abtriebskeils 106 vorgesehen.

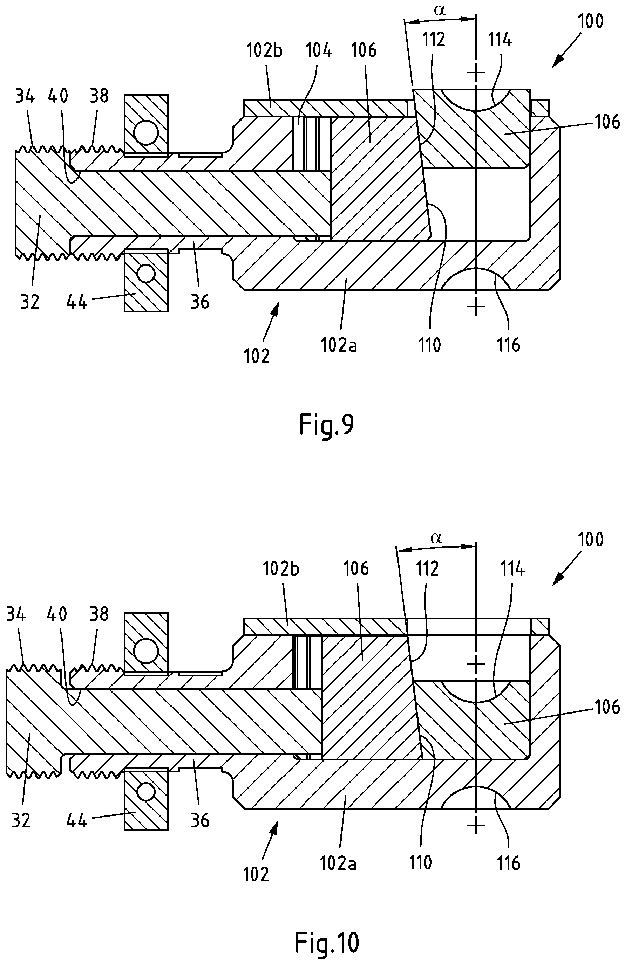

In den Fig. 8 wird ein Querschnitt dargestellt, in dem der Antriebskeil 106 bei einer Anwendung der Presskraft den Antriebskeil 106 senkrecht zur Zeichenebene bewegt wird. Die Fig. 9 und 10 zeigen einen Querschnitt in einer Ansicht senkrecht zur in Fig. 8 dargestellten Ansicht. Somit bewegt sich der Antriebskeil 106 bei Anwendung einer Presskraft von oben nach unten und somit im Wesentlichen senkrecht zur Schieberichtung des Abtriebskeils 106 von einer Ausgangsposition (Fig. 9) in eine Endposition (Fig. 10) bewegbar ist.

Dazu weisen der Abtriebskeil 106 und der Antriebskeil 108 schräg zur Bewegungsrichtung des Abtriebskeils 106 und schräg zur Schieberichtung des Antriebskeils 108 verlaufende Anlageflächen 110 und 112 auf. Dabei beträgt ein Winkel α zwischen der Schieberichtung des Antriebskeils 108 und der schräg verlaufenden Anlagefläche 112 weniger als 20°, vorzugsweise weniger als 10° beträgt.

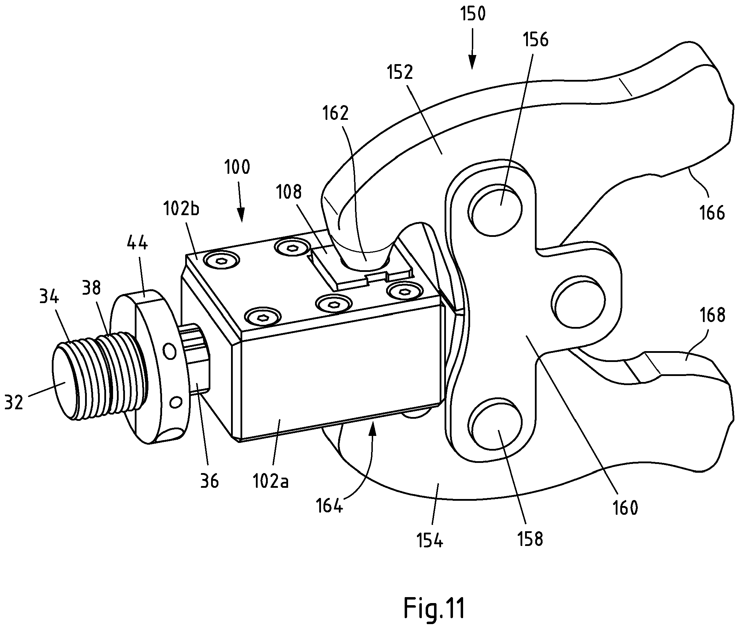

Für ein Ansetzen einer Pressbacke (siehe unten Fig. 11) weisen die beiden Seiten des Antriebskeils 108 rund ausgebildete Ansetzflächen 114 und 116 auf. Zudem besteht das Gehäuse 102 aus einem topfartigen Teil 102a und einem Deckel 102b. In bevorzugter Weise ist zudem eine Vorspanungsfeder (nicht dargestellt) für eine Rückstellung des Antriebskeils 108 in die Ausgangsposition vorgesehen.

Die von dem Antriebskeil 108 auf den Abtriebskeil 106 ausgeübte Kraft führt zu einem Verschieben des Abtriebskeils 106 relativ zum Gehäuse 102. Das wiederum führt zu einer Relativbewegung zwischen der ersten Gewindestange 32, die mit dem Abtriebskeil 106 verbunden ist, und der zweiten Gewindestange 36, die mit dem Gehäuse verbunden ist. In Fig. 10 sind die beiden Enden der Gewindeabschnitte 34 und 38 beabstandet dargestellt.

Bei der oben beschriebenen Anwendung des Werkzeugs 100 mit einer ortsfesten Wandscheibe 2 wird also das Gehäuse 102 zusammen mit der zweiten Gewindestange 36 von der Wandscheibe 2 entfernt und die erste Gewindestange 32 bleibt ortsfest mit der Wandscheibe 2 verbunden, wie es oben beschrieben worden ist. Die durch den Abtriebskeil 106 übertragene Kraft führt somit zu einem Abreißen des Gewindes 18 des Ablaufs 10 an der Sollbruchstelle 20.

Fig. 11 zeigt den beschriebenen Krafterzeuger 100 in einer perspektivischen Darstellung mit einer angesetzten Pressbacke 150, die zwei Pressbackenhälften 152 und 154 aufweist. Die Pressbackenhälften 152 und 154 sind mittels Gelenken 156 und 158 an einer Halterung 160 befestigt und weisen am vorderen Ende Ansetzelemente 162 und 164 auf. Die Ansetzelemente 162 und 164 weisen eine kalottenartige runde Form auf, die den Ansetzflächen 114 und 116 des Antriebskeils 108 entsprechen. Durch die runde Form können die Pressbackenhälften 152 und 154 in unterschiedlichen Winkeln an dem Antriebskeil 108 angesetzt und dann betätigt werden.

Eine Betätigung der Pressbacke 150 erfolgt durch eine nicht dargestellte, an sich bekannte Pressmaschine, die hydraulisch oder elektromotorisch einen Kolben vorschieben kann, in Fig. 11 von rechts nach links. Am Ende des Kolbens sind zwei Rollen angebracht, die an Innenseiten 166 und 168 einer sogenannten Einlaufkontur abrollen und somit die Pressbackenhälften 152 und 154 beim Vorschub des Kolbens auseinanderdrücken. Das Auseinanderdrücken führt zu einem Zusammendrücken der Ansetzelemente 162 und 164, wodurch die Presskraft auf den Antriebskeil 108 ausgeübt wird.

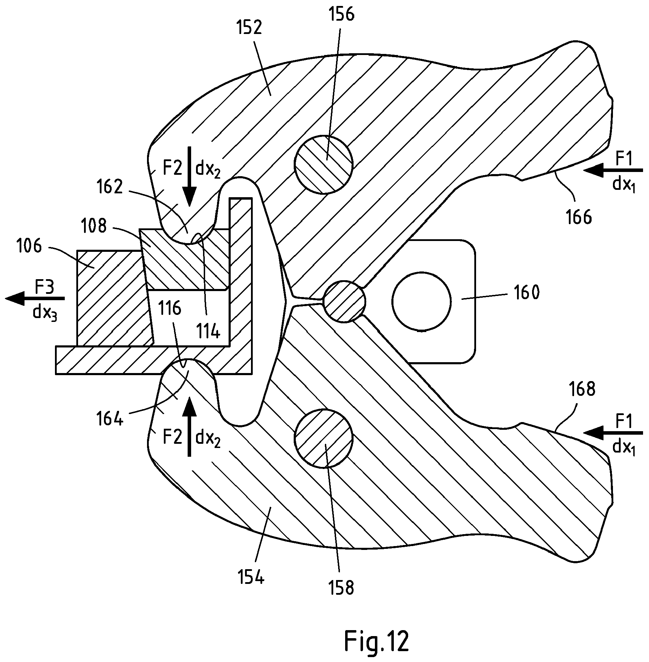

Fig. 12 zeigt schematisch die ausgeübten Kräfte bei der zuvor beschriebenen Anordnung. Der (nicht dargestellte) Kolben bewegt sich um eine Distanz dx1 von rechts nach links und übt eine horizontal wirkende Kraft F1 (siehe Pfeile) aus, die zu einem Verschwenken der Pressbackenhälften 152 und 154 führt. Durch die Schwenkbewegung wird eine in Fig. 11 senkrecht mit einem Pfeil dargestellte Kraft F2 erzeugt, während sich das Ansetzelement 162 um eine Distanz dx2 bewegt. Dabei ist dx2 kleiner als dx1und die Kraft F2 ist größer als F1.

Durch die schräg verlaufenden Flächen 110 und 112 wird die Bewegung des Antriebskeils 108 auf den Abtriebskeil 106 übertragen, wobei die Flächen 110 und 112 übereinander gleiten. Dabei wird abhängig vom vorgegebenen Winkel α die auf den Antriebskeil 108 ausgeübte Presskraft als Kraft F3 auf den Abtriebskeil 106 verstärkt übertragen, so dass F3 größer als F2 ist. Zudem ist die Größe der Verschiebung dx3 des Abtriebskeils 106 kleiner als die Größe der Verstellung dx2 des Antriebskeils 108.

Der beschriebene Krafterzeuger 100 ermöglicht also eine Kraftübersetzung durch den Antriebskeil 108 ausgehend von einer kleineren Kraft, die über einen größeren Verstellweg einer Pressbacke auf den Antriebskeil 108 übertragen wird, in einen betragsmäßig kleineren Schiebeweg bei einer betragsmäßig größeren Schiebekraft. Diese Kraftübersetzung ist insbesondere bei dem beschriebenen Abtrennen eines Teils eines Rohrabschnitts vorteilhaft, da es hierbei um eine große Kraftausübung bei lediglich kurzem Verstellweg ankommt.

Die in Fig. 12 dargestellten Pfeile sind nicht maßstabsgetreu, sondern geben lediglich die Bewegungsrichtung und Krafteinleitung wieder. In Abhängigkeit von der Dimensionierung der einzelnen Bauteile kann ein Übersetzungsverhältnis für F1:F3 von 1:10 bis 1:30 oder mehr erreicht werden.

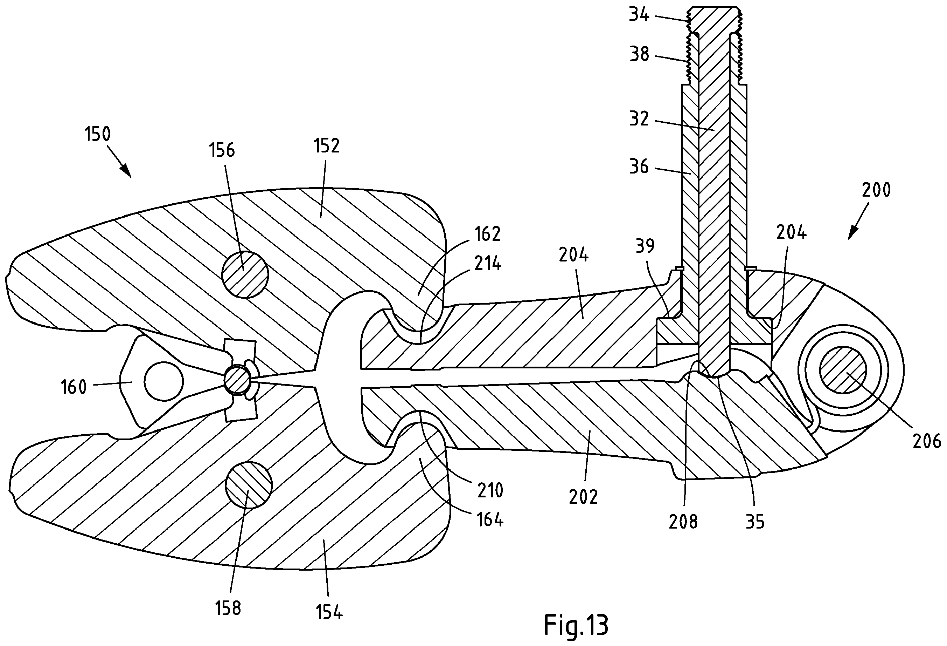

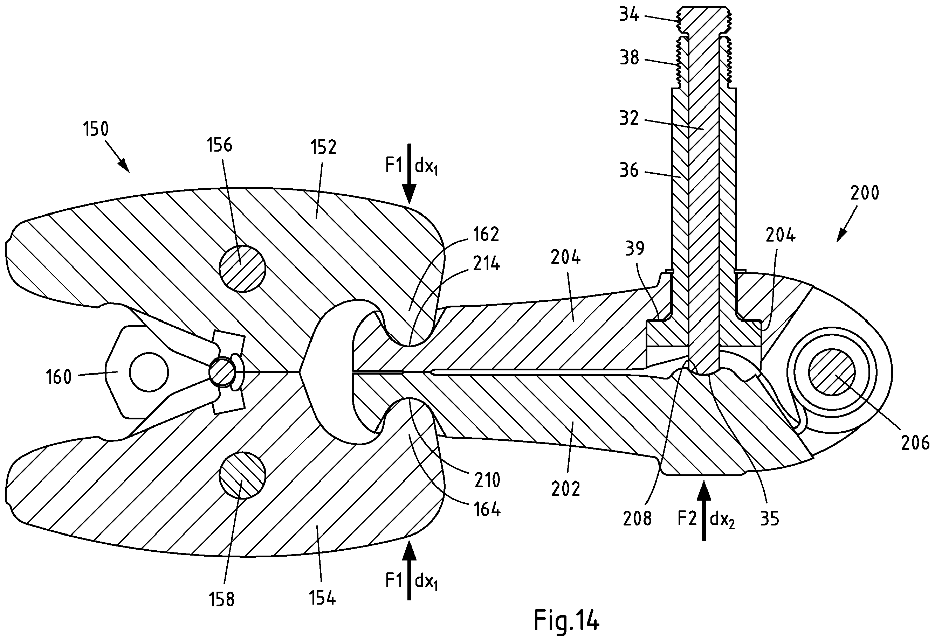

In den Fig. 13 und 14 ist ein weiteres Ausführungsbeispiel eines Krafterzeugers 200 dargestellt, der einen ersten Hebel 202 und einen zweiten Hebel 204 aufweist, die mit einem Gelenk 206 miteinander verbunden sind. Der erste Hebel 204 weist eine erste Kraftübertragungsfläche 208 zur Anlage an einer an der ersten Gewindestange 32 ausgebildeten Ansatzfläche 35 und eine erste Ansetzfläche 210 für das Ansetzen einer ersten Pressbackenhälfte 152 einer Pressbacke 150 auf. Weiterhin weist der zweite Hebel 204 eine zweite Kraftübertragungsfläche 212 zur Anlage an einer zweiten an der zweiten Gewindestange 36 ausgebildeten Ansatzfläche 39 und eine zweite Ansetzfläche 214 für das Ansetzen einer zweiten Pressbackenhälfte 154 einer Pressbacke 150 auf. Des Weiteren ist der Abstand der Kraftübertragungsflächen 208 und 212 zum Gelenk 206 kürzer als der Abstand der Ansetzflächen 210 und 214 zum Gelenk 206.

In Fig. 13 ist die Ausgangsposition mit benachbart angeordneten Gewindeabschnitten 34 und 38 und mit geöffneter Pressbacke 150 dargestellt. Durch eine Kraftausübung der Pressbacke, die mit F1 und dx1 gekennzeichnet ist, wird eine verstärkte Kraft F2 bei kleinerem Verschiebeweg dx2 erzeugt. Auch hier sind die dargestellten Pfeile nur symbolisch dargestellt, das Übersetzungsverhältnis F1:F2 kann auch hier Werte von 1:2 bis 1:30 annehmen.

## Patentansprüche

1. Wandscheibe für den Anschluss einer mit Wasser zu versorgenden Komponente,
- mit einem Befestigungsflansch (4) für das Anbringen an einer Wand,
- mit mindestens einem Zulauf (8) zur Verbindung mit einer Versorgungsleitung und
- mit einem mindestens Ablauf (10) zur Verbindung mit der zu versorgenden Komponente,
- wobei der Ablauf (10) mit einem Gewinde (18) versehen ist,
**dadurch gekennzeichnet,**
- **dass** der Ablauf (10) an mindestens einer axialen Position eine zumindest abschnittsweise, vorzugsweise vollständig, umlaufende Vertiefung (20) als Sollbruchstelle aufweist.

2. Wandscheibe nach Anspruch 1,
**dadurch gekennzeichnet,**
**dass** die mindestens eine Sollbruchstelle (20) durch eine innen ausgebildete Nut (22) und/oder durch eine außen ausgebildete Nut (24) ausgebildet ist.

3. Werkzeug zum Kürzen eines Rohrabschnitts (10) mit einem Gewinde (18) mit mindestens einer Sollbruchstelle (20), insbesondere eines Ablaufs einer Wandscheibe (2) nach Anspruch 1 oder 2,
- mit einer ersten Gewindestange (32) mit einem ersten Gewindeabschnitt (34) und
- mit einer zweiten Gewindestange (36) mit einem zweiten Gewindeabschnitt (38),
- wobei die zweite Gewindestange (36) eine durchgehende, vorzugsweise runde oder mehrkantige, Öffnung, insbesondere eine Bohrung (40) zur Aufnahme der ersten Gewindestange (32) aufweist und die erste Gewindestange (32) und die zweite Gewindestange (36) axial gegeneinander verschiebbar sind,
- wobei in einer ersten Position der Gewindestangen (32, 36) der erste Gewindeabschnitt (34) und der zweite Gewindeabschnitt (36) benachbart zueinander angeordnet sind und
- wobei in einer zweiten Position der Gewindestangen (32, 36) der erste Gewindeabschnitt (34) und der zweite Gewindeabschnitt (38) auseinander gezogen und beabstandet zueinander angeordnet sind.

4. Werkzeug nach Anspruch 3,
**dadurch gekennzeichnet,**
- **dass** ein Anschlagelement (44) vorgesehen ist und
- **dass** das Anschlagelement (44) verschiebbar auf der Außenseite der zweiten Gewindestange (36) befestigt ist.

5. Werkzeug nach Anspruch 3 oder 4,
**dadurch gekennzeichnet,**
**dass** ein Krafterzeuger (100; 200) zum Erzeugen einer Verschiebekraft zum Auseinanderziehen der ersten Gewindestange (32) und der zweiten Gewindestange (36) vorgesehen ist.

6. Werkzeug nach Anspruch 5,
**dadurch gekennzeichnet,**
- **dass** der Krafterzeuger (100) ein mit der zweiten Gewindestange (36) verbundenes Gehäuse (102) aufweist,
- **dass** ein Abtriebskeil (106) in dem Gehäuse (102) verschiebbar angeordnet ist und an der ersten Gewindestange (32) anliegt,
- **dass** ein Antriebskeil (108) zum Übertragen einer von außen ausgeübten Presskraft in eine lineare Bewegung des Abtriebskeils (106) vorgesehen ist,
- **dass** der Antriebskeil (108) im Wesentlichen senkrecht zur Schieberichtung des Abtriebskeils (106) von einer Ausgangsposition in eine Endposition bewegbar ist und
- **dass** der Abtriebskeil (106) und den Antriebskeil (108) schräg zur Bewegungsrichtung des Abtriebskeils (106) und schräg zur Schieberichtung des Antriebskeils (108) verlaufende Anlageflächen (110, 112) aufweisen.

7. Werkzeug nach Anspruch 6,
**dadurch gekennzeichnet,**
**dass** ein Winkel (α) zwischen der Schieberichtung des Antriebskeils (108) und der schräg verlaufenden Anlagefläche (112) weniger als 45°, insbesondere weniger 20°, vorzugsweise weniger als 10° beträgt.

8. Werkzeug nach Anspruch 6 oder 7,
**dadurch gekennzeichnet,**
**dass** an der Außenseite des Gehäuses (102) und an der Außenseite des Antriebskeils (108) Ansetzflächen (114, 116) für Pressbackenhälften ausgebildet sind.

9. Werkzeug nach Anspruch 5,
**dadurch gekennzeichnet,**
- **dass** der Krafterzeuger (200) einen ersten Hebel (202) und einen zweiten Hebel (204) aufweist, die mit einem Gelenk (206) miteinander verbunden sind,
- **dass** der erste Hebel (202) eine erste Kraftübertragungsfläche (208) zur Anlage an einer an der ersten Gewindestange (32) ausgebildeten Ansatzfläche (35) und eine erste Ansetzfläche (210) für das Ansetzen einer ersten Pressbackenhälfte aufweist,
- **dass** der zweite Hebel (204) eine zweite Kraftübertragungsfläche (212) zur Anlage an einer an der zweiten Gewindestange (36) ausgebildeten Ansatzfläche (39) und eine zweite Ansetzfläche (214) für das Ansetzen einer zweiten Pressbackenhälfte aufweist und
- **dass** der Abstand der Kraftübertragungsflächen (208, 212) zum Gelenk (206) kürzer als der Abstand der Ansetzflächen (210, 214) zum Gelenk (206) ist.

10. Verfahren zum Kürzen eines Rohrabschnitts mit einem eine Sollbruchstelle aufweisenden Gewinde, insbesondere eines Ablaufs einer Wandscheibe nach Anspruch 1 oder 2,
- bei dem ein Werkzeug nach einem der Ansprüche 3 bis 9 verwendet wird,
- bei dem der erste Gewindeabschnitt der ersten Gewindestange und der zweite Gewindeabschnitt der zweiten Gewindestange nahe zueinander, vorzugsweise in Anlage zueinander, positioniert werden,
- bei dem das Werkzeug so weit in den Rohrabschnitt eingeschraubt wird,
-- dass die axiale Position des distalen Endes des ersten Gewindeabschnitts mindestens so tief wie die axiale Position der Sollbruchstelle des Rohrabschnitts positioniert ist und
-- dass die axiale Position des proximalen Endes des zweiten Gewindeabschnitts weniger tief wie die axiale Position der Sollbruchstelle des Rohrabschnitts positioniert ist,
- bei dem die zweite Gewindestange relativ zur ersten Gewindestange in axialer heraus aus dem Rohrabschnitt bewegt wird und
- bei dem der Rohrabschnitt durch die Bewegung der zweiten Gewindestange relativ zur ersten Gewindestange an der Sollbruchstelle abgerissen wird.

11. Verfahren nach Anspruch 10,
- bei dem eine Eindringtiefe des Gewindeabschnitts der ersten Gewindestange und des Gewindeabschnitts der zweiten Gewindestange durch Positionieren eines Anschlagelements festgelegt wird und
- bei dem das Werkzeug bis zu einem Anliegen des Anschlagelements am vorderen Ende des Rohrabschnitts eingeschraubt wird.
